# EUROPEAN PATENT SPECIFICATION

(11) **EP 0 519 687 B1**
(45) Date of publication and mention of the grant of the patent: **22.10.1997**
(21) Application number: 92305519.8
(22) Date of filing: 16.06.1992
(51) Int. Cl.: F25B 15/06

(54) **Absorption chiller or absorption chiller-heater**
Absorptionskühler oder Absorptionskühl- oder heizgerät
Refroidisseur à absorption ou refroidisseur-dispositif de chauffage à absorption

(30) Priority: 18.06.1991 JP 174331/91
(43) Date of publication of application: 23.12.1992
(73) Proprietor: KAWASAKI THERMAL ENGINEERING CO., LTD., Kusatsushi, Shigaken (JP)
(72) Inventor: Takahata, Shuzo, Ootsushi, Shigaken (JP); Ooishi, Osamu, Kusatsushi, Shigaken (JP); Nakajima, Kunihiko, Ootsushi, Shigaken (JP); Okita, Tomiyasu, Amagasakishi, Hyogoken (JP)
(74) Representative: Price, Paul Anthony King

(56) References cited:
- US-A- 3 120 113
- US-A- 3 314 246
- US-A- 3 357 202
- US-A- 3 540 231
- US-A- 4 179 895
- US-A- 4 462 222
- US-A- 5 044 174

## Description

The present invention relates to an absorption chiller or absorption chiller-heater.

A known absorption chiller-heater uses, for example, lithium bromide as absorbent and, for example, water as refrigerant.

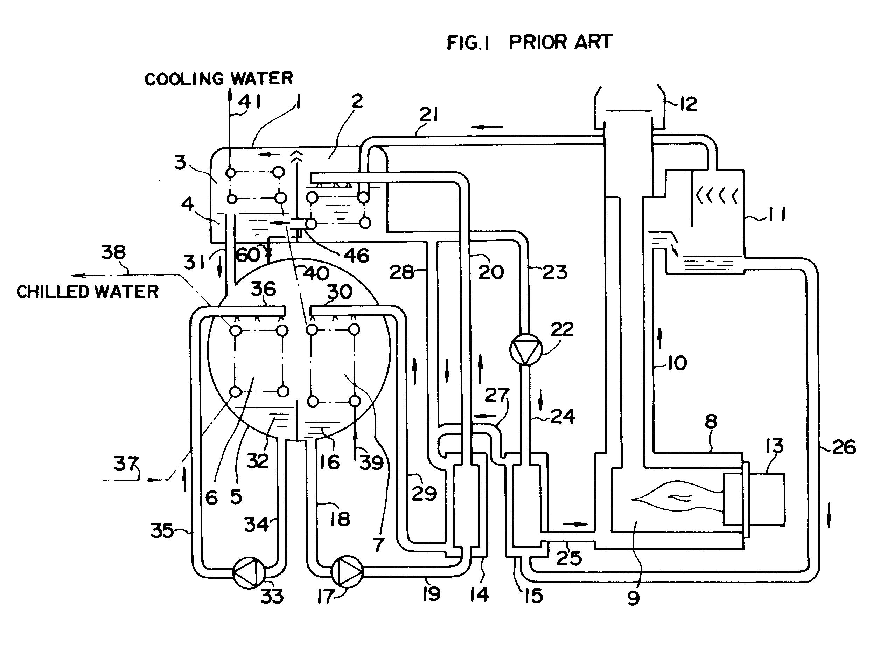

A conventional absorption chiller-heater is shown in Fig. 1. An upper low temperature unit 1 comprises a low temperature regenerator 2, a condenser 3 and a refrigerant sump 4 installed in the lower part in the condenser 3. A lower low temperature unit 5 comprises an evaporator 6 and an absorber 7. A high temperature regenerator 8 comprises a combustion chamber 9, heat recovery unit 10, gas-liquid separator 11, exhaust duct 12 and combustion unit 13. Other constituent devices include a low temperature heat exchanger 14 and a high temperature heat exchanger 15.

The weak solution in a liquid sump 16 in the lower part of the absorber 7 is sent by a low temperature pump 17 to the low temperature regenerator 2 through ducts 18, 19, low temperature heat exchanger 14 and duct 20. This weak solution is heated by the high temperature refrigerant vapour flowing in from a duct 21, and is concentrated to an intermediate concentration.

The intermediate solution is divided in two portions. A first one of the two portions is sent to the high temperature regenerator 8 by a high temperature pump 22 through ducts 23, 24, high temperature heat exchanger 15 and duct 25. The first portion is heated by the combustion unit 13, and rises up the heat recovery unit 10 and enters the gas-liquid separator 11 to be separated into refrigerant vapour and strong solution.

The second one of the two portions of intermediate solution passes along the duct 28 and is mixed with the strong solution that is forced through strong solution duct 26, high temperature heat exchanger 15 and duct 27 by the differential in pressure between the approximately 650 mmHg pressure in the high temperature regenerator 8 and the approximately 6 mmHg pressure in the lower low temperature unit 5. The mixed strong solution enters the low temperature heat exchanger 14, passes through a duct 29, and is sprayed over the heating tubes (heat transfer tubes) of the absorber 7 by a sprinkler (sprayer) 30, and then returns to the liquid sump 16 to complete the circulation loop.

On the other hand, the refrigerant vapour separated in the gas-liquid separator 11 enters the low temperature regenerator 2 through the duct 21. It heats the weak solution, and itself is condensed and liquified, and enters the condenser 3 through a duct 46. In the low temperature regenerator 2, the refrigerant vapour generated when the weak solution is concentrated to an intermediate solution gets into the condenser 3 across the upper space of the unit 1 and is condensed to form liquid refrigerant. The condensed refrigerant enters the evaporator 6 through a duct 31, and is collected in the lower sump 32. The refrigerant is sprayed over the heating tubes of the evaporator 6 by the sprinkler 36 after passing through ducts 34, 35.

Chilled water that has been used for air cooling (air conditioning) enters the evaporator 6 though a duct 37, is cooled by the latent heat of evaporation of the dripping refrigerant, and flows out through the duct 38. The cooling water flows through ducts 39, 40, 41 and removes the absorption heat from the absorber 7 and the condensation heat from the condenser 3 on the way and then exits the apparatus.

By opening the chiller-heater changeover valve 60 and stopping the cooling water from entering the duct 39, warm water (hot water) can be obtained from the duct 38.

Thus, in the conventional absorption chiller or absorption chiller-heater, inside the cylindrical lower low temperature unit 5, the evaporator 6 and the absorber 7 are disposed side by side, while the condenser 3 and low temperature regenerator 2 are disposed in the upper low temperature unit 1 which is separate from the lower low temperature unit 5.

Accordingly, the machine width is large and, especially when a large-capacity machine was being transported on a trailer or the like, it was necessary to separate the low temperature unit and high temperature regenerator 8 and to separate the lower low temperature unit 5 and upper low temperature unit 1. The low temperature units (upper + lower) and high temperature regenerator are connected to each other by vacuum piping, and it was necessary to cut the piping, transport the components, reassemble the components at the site, weld the piping together again, and check the welding by vacuum testing. Cutting and welding of the piping, transporting the vacuum test apparatus, and performing the vacuum test was very costly. Also, because of the large machine width, it was difficult to deliver into the machine room at the site.

Because of the large size of the prior art machine, especially if the machine was of large capacity, it was necessary to separate the low temperature units (upper + lower) from the high temperature regenerator, or to separate the upper low temperature unit, lower low temperature unit and high temperature regenerator from each other.

US-A-3,540,231 discloses an absorption chiller having a cylindrical unit which contains an absorber, an evaporator, a condenser and a low pressure generator. This unit is integral with another unit which contains a high pressure generator.

US-A-5,044,174 is an english-language equivalent of JP-A-2-78866 published on 19th March 1990. US-A-5,044,174 discloses an absorption chiller which is made up of two similar modules which are connected together laterally. Each module is generally rectangular in cross-section.

According to the present invention, there is provided an absorption chiller or absorption chiller-heater comprising a plurality of modules, wherein: the modules are connected together laterally or connected together laterally and vertically; a cold/warm water inlet, a cold/warm water outlet, a cooling water inlet and a cooling water outlet are disposed on the rear or upper side of the plurality of modules; and each module comprises:
(i) a low-temperature unit having a box-shaped main body which is substantially the shape of a rectangular parallelepiped and contains: an absorber disposed towards the bottom of the main body; an evaporator disposed above the absorber; a partition disposed above the evaporator; a low temperature regenerator and a condenser disposed above the partition; and a refrigerant sump which is disposed between the evaporator and absorber and has a cross-section which is substantially V or U-shaped so that refrigerant evaporated by the evaporator flows past the outside of the sump to the absorber; and
(ii) integral with the low-temperature unit. at least one of a high-temperature regenerator, a low-temperature heat exchanger and a high-temperature heat exchanger.

It is easy to increase the capacity of the absorption chiller or absorption chiller-heater by connecting on additional modules in the lateral direction, or in the lateral and vertical directions.

The shape of the refrigerant sump between the evaporator and absorber permits the easy flow of refrigerant vapour, thereby allowing the low temperature unit to have a narrow width.

Each module may be transported on a trailer without having to divide or separate the units of the module. Thus, the module may be easily delivered into a machine room without having to cut any vacuum piping of the entire module, and in the machine room the plurality of modules may be connected together laterally, or laterally and vertically, so that the overall capacity may be easily increased to suit any requirement.

Preferably, the main body also contains an eliminator which is positioned to the side of the evaporator at an oblique angle to the adjacent wall of the main body so as to define between the eliminator and the main body a passage for the refrigerant vapour which tapers in the upward direction.

Preferably, the eliminator comprises a plurality of upwardly and outwardly slanted plates each having at its upper end an upwardly projecting part and a downwardly projecting part. The downwardly projecting parts smoothly divert the refrigerant vapour down towards the absorber.

Preferably, an enclosing member with a closed upper end encloses a space within the absorber and a purge pipe is connected to the space for subjecting the space to a reduced pressure to suck away uncondensed refrigerant vapour.

Preferably, a flush box is disposed between the evaporator and the sump and comprises inner and outer tubes separated by a flush chamber, with the inner tube having longitudinally spaced apertures for discharging condensed refrigerant into the flush chamber to separate the condensed refrigerant into refrigerant vapour and refrigerant liquid, and the outer tube having a first set of longitudinally spaced apertures for discharging the refrigerant liquid into the sump and a second set of longitudinally spaced apertures for discharging the refrigerant vapour into substantially the entire overlying length of the evaporator.

The invention will now be described by way of non-limiting embodiments with reference to the accompanying drawings, in which:-
Fig. 1 is a diagram showing the flow in a conventional absorption chiller-heater;
Fig. 2 is a sectional view showing a low temperature unit of a module of an absorption chiller-heater in accordance with the invention:

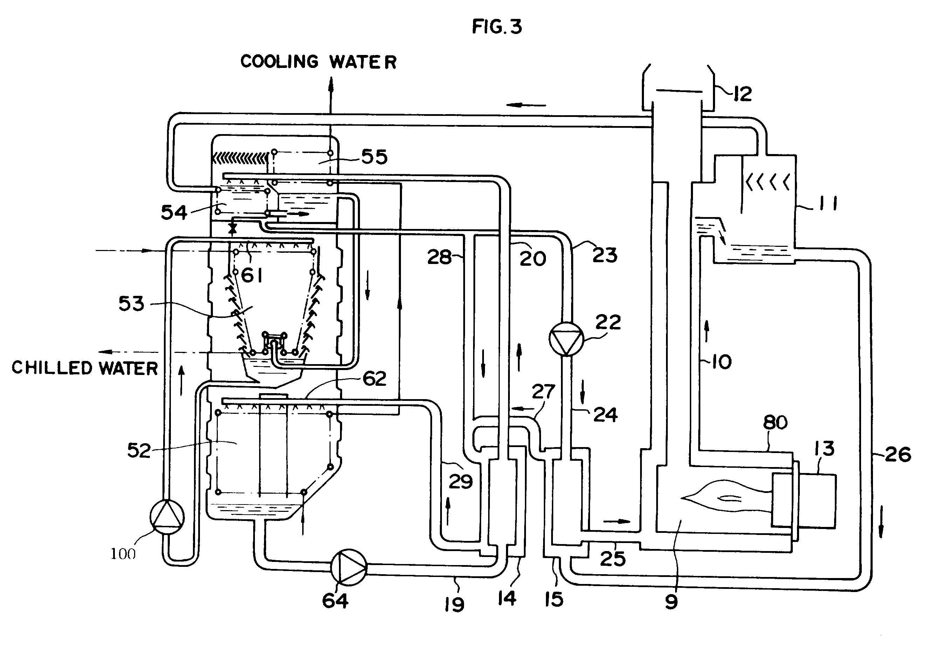

Fig. 3 is a diagram showing the flow around a module incorporating the low temperature unit of Fig. 2;
Fig. 4 is a magnified view showing details of an eliminator of the low temperature unit of Fig. 2;
Fig. 5 is a perspective view showing an enclosing member of the low temperature unit of Fig. 2;
Fig. 6 is a magnified sectional view showing an example of a flush box of the low temperature unit of Fig. 2;
Fig. 7 is a magnified sectional view showing another example of a flush box;
Fig. 8 is a front view showing an example of a module constructed in accordance with Fig. 3;
Fig. 9 is a right side view of the module of Fig. 8:
Fig. 10 is a front view showing another example of a module:
Fig. 11 is a plan view showing an embodiment of an absorption chiller-heater of the invention when the modules are grouped in parallel in the lateral direction;
Fig. 12 is a front view of the configuration of Fig. 11;
Fig. 13 is a right side view of the configuration of Fig. 11;
Fig. 14 is a right side view showing another configuration;
Fig. 15 is a front view showing a module of the configuration of Fig. 14:
Fig. 16 is a right side view of the module of Fig. 15:
Fig. 17 is front view showing the configuration of modules of an embodiment of an absorption chiller-heater of the invention when the modules are connected laterally and vertically;
Fig. 18 is a right side view of the configuration of Fig. 17:
Fig. 19 is a front view showing the configuration of modules of an embodiment of an absorption chiller-heater of the invention when the modules are connected together laterally and vary in width depending on their capacity; and
Fig. 20 is a right side view of the configuration of Fig. 19.

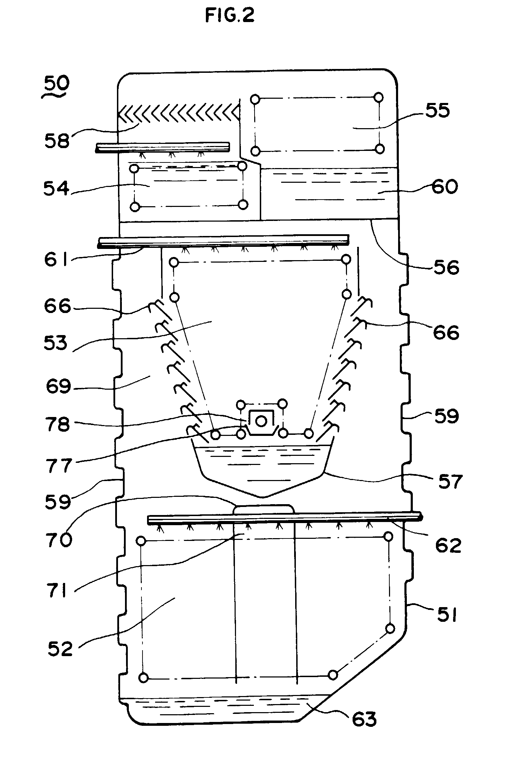

The low temperature unit 50 of Fig. 2 comprises an absorber 52 disposed in the bottom of a box-shaped main body 51 shaped like a rectangular parallelepiped; an evaporator 53 disposed above the absorber; a low temperature regenerator 54 and a condenser 55 both disposed above the evaporator and a partition plate 56; and a refrigerant sump 57 of nearly V or U shape disposed between the evaporator and absorber so that the refrigerant vapour evaporated in the evaporator tube may smoothly flow into the absorber. A module is formed by making the low temperature unit integral with other units such as a high temperature regenerator, a low temperature heat exchanger and a high temperature heat exchanger.

An eliminator 66 is positioned around the evaporator 53 and increases in width in the upward direction in order to define a passage 69 for refrigerant vapour evaporated in the evaporator tube. The passage becomes narrower in the upward direction.

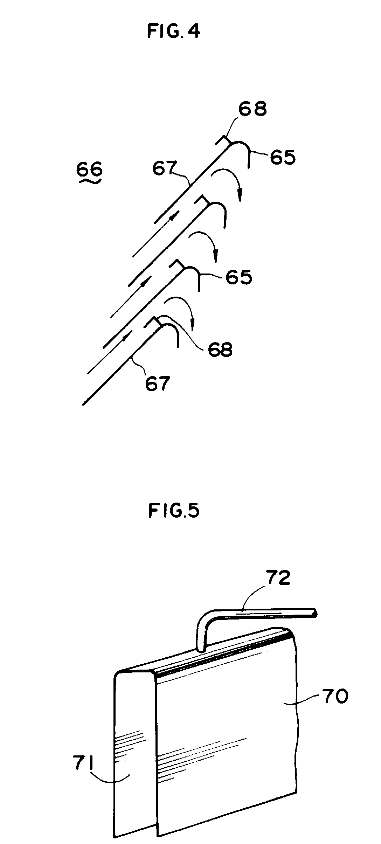

The eliminator 66 comprises multiple angled plates 67, folded-back parts 68 on the upper surface of the upper ends of the angled plates, and flow diversion parts 65 that curve downwards from the upper ends of the angled plates. Because of the flow diversion parts 65, the refrigerant vapour is smoothly forced to flow downwards towards the absorber 52. The flow is shown by arrows in Fig. 4. Liquid drops are stopped by the folded-back parts 68 and flow back down along the angled plates 67. The folded-back parts 68 are shown as being sharply bent, but may instead be gently curved.

An enclosing member 70 with a closed upper end is disposed in a part of the absorber 52 in order to collect the uncondensed gas from that part of the absorber. The inside space 71 of the member 70 is at a reduced pressure and a purge pipe 72 is connected to the inside space in order to collect the uncondensed gas.

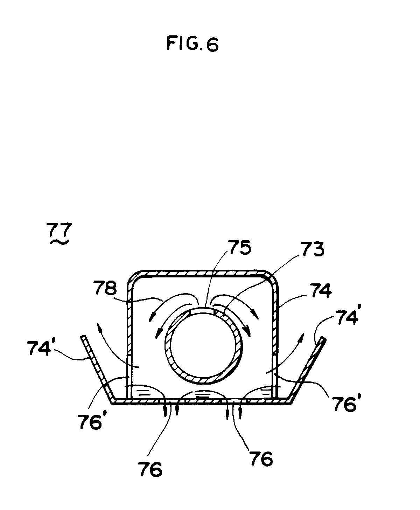

A flush box 77 disposed between the evaporator 53 and refrigerant sump 57 comprises an inner tube 73 and outer box 74 that define a flush chamber 78 therebetween. Multiple small holes 75, 76 are located along the longitudinal direction of the inner tube and outer box, and bigger notches 76' are located in the outer box, along the entire length of the evaporator. Fig. 6 shows the holes 75 as being in the upper part of the inner tube and the holes 76 as being in the lower part of the outer box, but alterative positions are possible. At both sides of the bottom of the outer box, there are guide members 74' directed obliquely upwards. Condensed refrigerant from the condenser 55 is passed along the inner tube 73, and flows into the flush chamber 78 between the outer box and inner tube through the holes 75. This separates it into refrigerant vapour and refrigerant liquid. The refrigerant vapour and refrigerant liquid after separation flow downwards. and the refrigerant vapour is discharged through the notches 76', while the refrigerant liquid flows out through the holes 76 in the outer box.

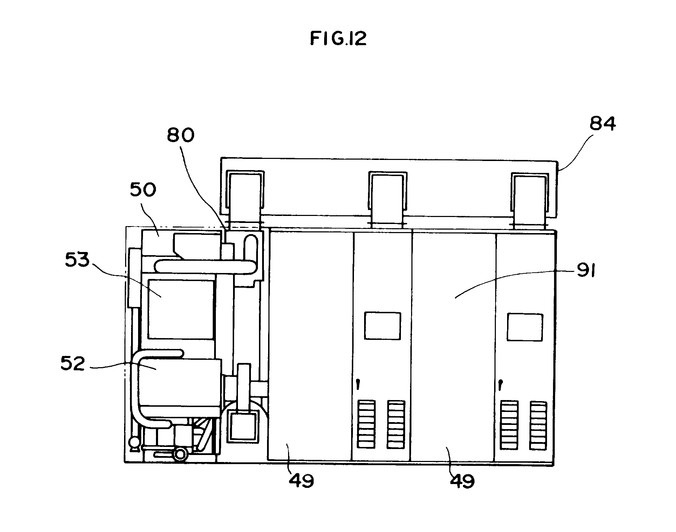

Because the low temperature unit has its working components located in a space efficient manner within a common main body, the module which includes the low temperature unit is compact enough to be transported as a single item instead of having to be divided up by cutting the vacuum piping as in the prior art. It is also easy to deliver the module into a machine room at the installation site and, as shown in Figs. 11 and 12, a plurality of the modules 49 may be disposed in parallel in the lateral direction in the machine room in order to provide a desired total capacity.

The modules 49 may be connected together laterally or stacked up in the vertical direction, or both.

A cold/warm (hot) water inlet 86, a cold/warm (hot) water outlet 87, a cooling water inlet 89 and a cooling water outlet 85 are positioned on the rear or top of the group of modules. The modules 49 may be entirely enclosed by a decorative cover 91 so as to look like a single machine. A temperature sensor 93 may be installed on the cold/warm water outlet 87 to detect the temperature of the cold/warm water produced by the modules 49, with the detected temperature being used to control the amount of fuel supplied to each module.

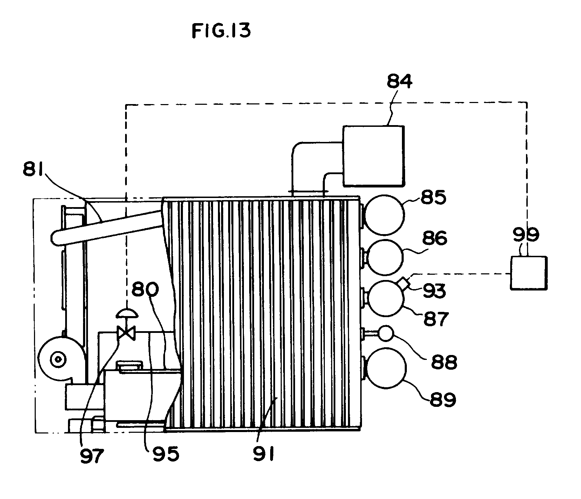

In Fig. 13, numeral 95 is a fuel supply pipe to the module, 97 is a fuel control valve of the module, and 99 is a controller.

The part of the wall of the main body 51 that contains a high vacuum is reinforced by undulations 59. Accordingly. the wall thickness may be as thin as that of the conventional cylindrical type of body. The undulations 59 may extend longitudinally of the main body, or may be localized.

Numeral 58 is a baffle plate, 60 is a refrigerant sump, 61 is a refrigerant sprinkling pipe, 62 is an absorption solution sprinkling pipe, 63 is an absorption solution sump, 64 is a low temperature pump, and 100 is a refrigerant pump.

The refrigerant vapour that is evaporated by contact with the heating tube of the evaporator 53 flows down past the refrigerant sump 57 and smoothly into the absorber 52.

Thus, in the box-shaped main body 51, the absorber 52, evaporator 53, low temperature regenerator 54 and condenser 55 are disposed sequentially from the bottom, and the refrigerant sump 57 is formed with nearly a V-shape or U-shape, so that the space in the main body 51 is effectively utilized, and the width W of the main body 51 is significantly less than for the conventional cylindrical type.

In the conventional absorption chiller-heater shown in Fig. 1, the condensed refrigerant fed into the evaporator 6 from the condenser 3 is sprayed by the sprinkler 36. In order to slow down the flow velocity of the refrigerant vapour in a part of the evaporator 6, it was necessary for the evaporator 6 to have a wide section.

As shown in Fig. 6, the flush box 77 has a double structure with a flush chamber 78 between the inner tube and outer box. By using the entire length of the evaporator 53, the flush box 77 has a compact sectional shape. This helps give the low temperature unit 50 its slim and compact shape.

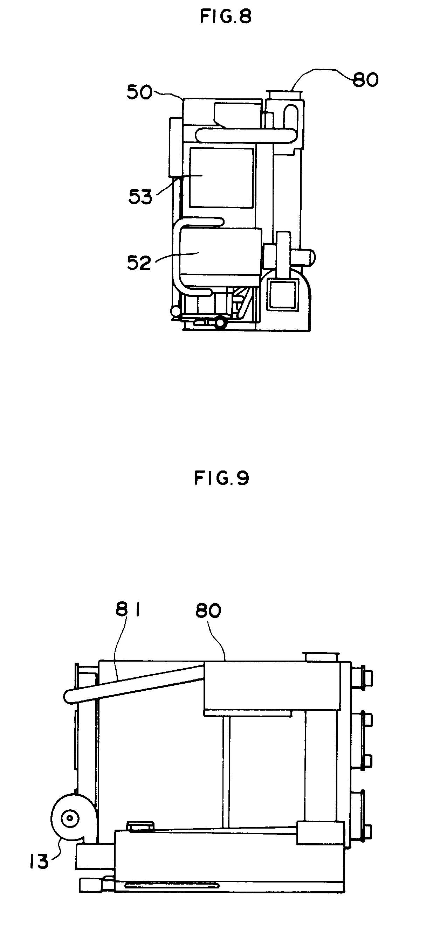

The low temperature unit 50, high temperature regenerator 80 and other units are formed as one body, so that the entire module 49 has a slim and compact shape (see Figs. 8 and 9). Numeral 81 denotes a refrigerant vapour pipe.

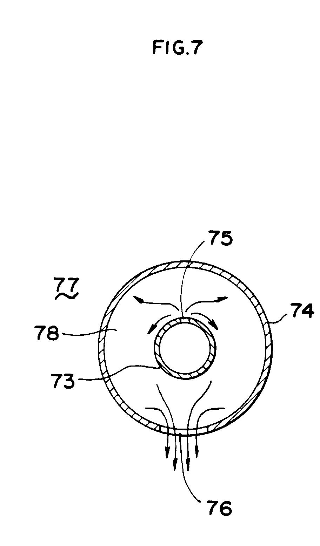

As shown in Fig. 7, the flush box 77 may have a double round tube structure by giving the outer box 74 a round tubular shape.

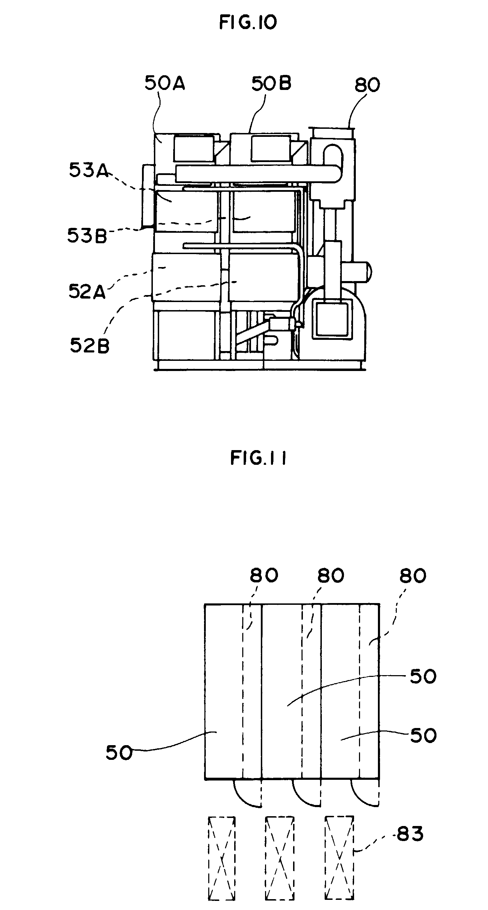

Fig. 10 shows an example of forming an absorption chiller-heater module by combining in parallel two adjacent low temperature units 50A, 50B and high temperature regenerator 80. Numerals 52A, 52B are the absorbers, and 53A, 53B are the evaporators.

A module 49 comprising the low temperature unit 50 (or units 50A and 50B), high temperature regenerator 80 and other units may be transported in the fully assembled state to a machine room as shown in Fig. 11. The module 49 is installed in parallel in the lateral direction with other modules 49, so that the total capacity may be easily enhanced. Numeral 83 is a heating pipe draw-out space.

Fig. 12 is a front view of the assembled modules of Fig. 11, and Fig. 13 is a right side view. Numeral 84 denotes an exhaust gas outlet, and 88 is a fuel inlet.

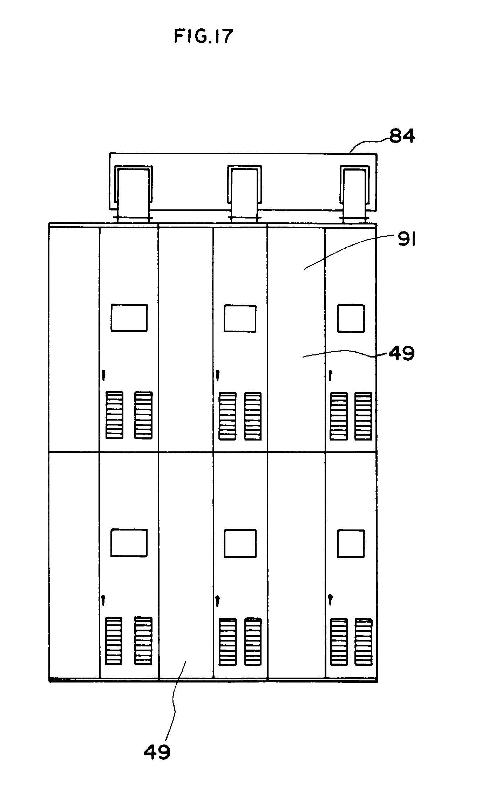

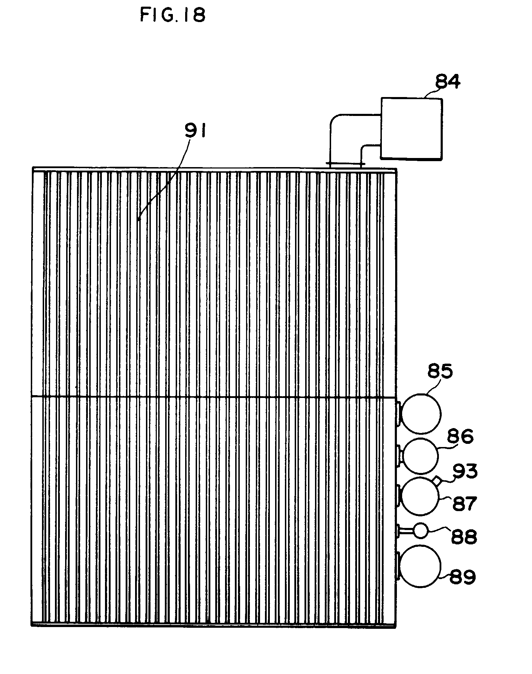

Figs. 17 and 18 show how the modules 49 may be connected together both laterally and vertically. In Fig. 17, as an example, three lateral rows and two vertical layers are shown, but the number of rows or layers may be increased or decreased to produce any required capacity.

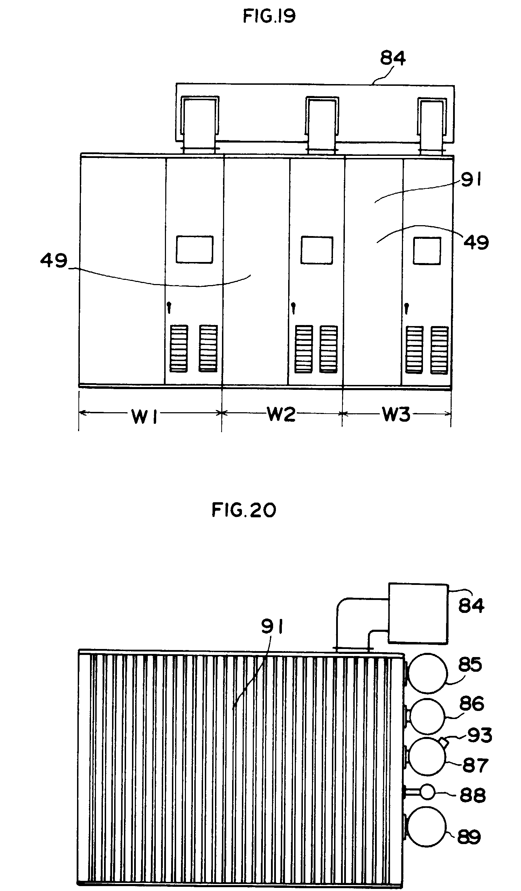

Figs. 19 and 20 show how modules 49 of different width may be used to produce a required capacity. In Fig. 19, for example, three types of modules having widths W1, W2, W3 are connected together laterally. It is also possible to stack up the modules in the vertical direction.

When the modules are connected laterally, or laterally and vertically, there is no maintenance access to the sides of the main bodies of the middle modules. Instead, maintenance access is possible from the front side or rear side of the main bodies. In such a case, the cold/warm water inlet 86, cold/warm water outlet 87, cooling water inlet 89, cooling water outlet 85, fuel inlet 88, and exhaust gas outlet 84 are obstacles for maintenance access. Accordingly, as shown in Fig. 13, they are grouped together at the rear side of the main body, and it is therefore possible to have maintenance access from the front side of the main body.

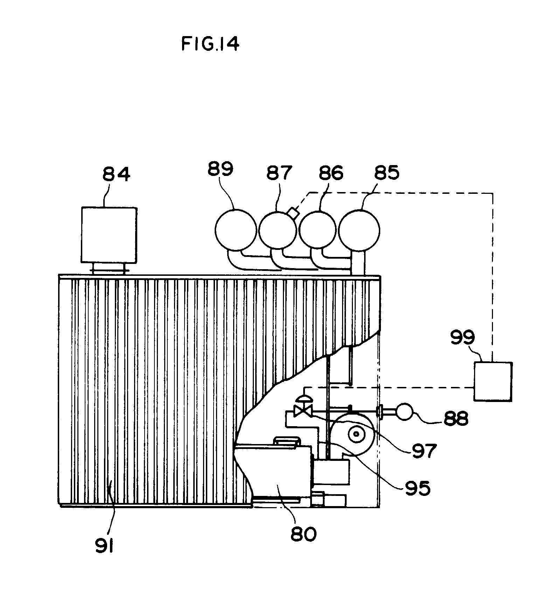

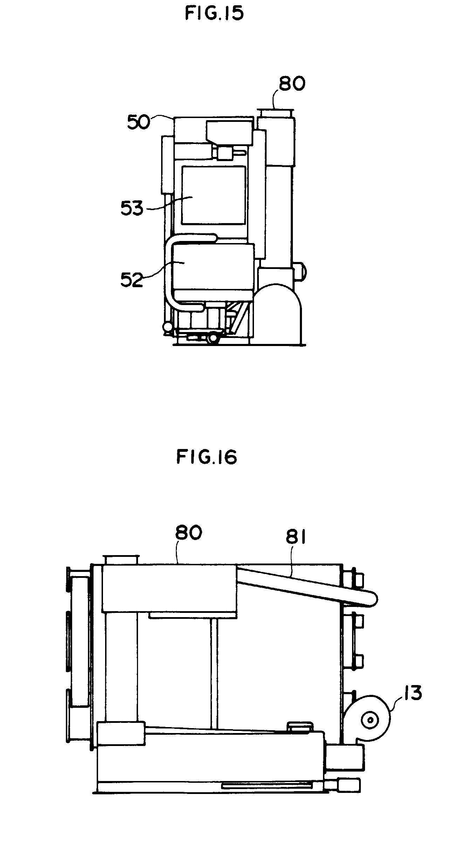

Alternatively, as shown in Fig. 14, components 86, 87, 89, 85, 84 may be grouped together on the upper surface of the main body so as to have maintenance access from the front or rear side of the main bodies. In this case, the front side of the module is as shown in Fig. 15, and the right side view of the module is as shown in Fig. 16.

It is also recommended that the assembled modules, whether grouped laterally or grouped laterally and vertically, are enclosed with a decorative cover (casing) 91, so as to look like a single machine.

The embodiments of the invention offer the following benefits.
(1) By installing the absorber, evaporator, low temperature regenerator and condenser in the vertical direction from the bottom of the box-shaped main body of nearly rectangular parallelepiped shape, and giving the low temperature unit a refrigerant sump shaped to ease the flow of the refrigerant vapour, the space in the main body is effectively utilized. The main body width is reduced significantly, so as to be slim and light-weight. Therefore, by forming a module from the low temperature unit, high temperature regenerator and other units, the module is also slim and compact.
(2) Because the eliminator increases in width in the upward direction in order to define a refrigerant vapour passage which becomes narrower in the upward direction, the main body width may be made even narrower.
(3) Because the enclosing member is disposed in a part of the absorber so that the uncondensed gas in the absorber may be efficiently collected at one position and then purged, the main body width may be made even more narrow.
(4) Because the flush box has a double structure and is disposed along the full length of the evaporator, it may have compact sectional shape. This permits further reduction of the width of the main body.
(5) The low temperature unit has a small width and, by manufacturing modules of a standard capacity, it is possible to transport each module without dividing it up or cutting the vacuum piping as in the prior art. Each module easily fits into a machine room. To produce the desired capacity, a plurality of modules are connected together in the machine room either laterally or both laterally and vertically.
(6) Modules are easily disconnected from each other, without cutting the vacuum piping.
(7) By manufacturing basic modules, labour may be saved in production and mass production is possible. By properly considering the construction of the basic module to simplify transport and assembly, the field work is made easy. The final product may be easily delivered in modules. and very large absorption chillers/absorption chiller-heaters that could not previously be realized because it was impossible to deliver them to the machine room may be produced by using the present invention. Also. the number of types of module may be reduced, so that the reliability of the modules may be enhanced. Thus, if one module fails, the operation can be continued by the remaining modules.

Having described preferred embodiments of the invention with reference to the accompanying drawings, it is to be understood that the invention is not limited to those precise embodiments.

## Claims

1. An absorption chiller or absorption chiller-heater comprising a plurality of modules (49), wherein:
the modules (49) are connected together laterally or connected together laterally and vertically;
a cold/warm water inlet (86), a cold/warm water outlet (87), a cooling water inlet (89) and a cooling water outlet (85) are disposed on the rear or upper side of the plurality of modules; and
each module (49) comprises:
(i) a low-temperature unit (50) having a box-shaped main body (51) which is substantially the shape of a rectangular parallelepiped and contains:
an absorber (52) disposed towards the bottom of the main body;
an evaporator (53) disposed above the absorber;
a partition (56) disposed above the evaporator;
a low temperature regenerator (54) and a condenser (55) disposed above the partition; and
a refrigerant sump (57) which is disposed between the evaporator and absorber and has a cross-section which is substantially V or U-shaped so that refrigerant evaporated by the evaporator flows past the outside of the sump to the absorber; and
(ii) integral with the low-temperature unit (50), at least one of a high-temperature regenerator (80), a low-temperature heat exchanger (14) and a high-temperature heat exchanger (15).

2. An absorption chiller or absorption chiller-heater according to claim 1, wherein the main body (51) also contains an eliminator (66) which is positioned to the side of the evaporator (53) at an oblique angle to the adjacent wall of the main body (51) so as to define between the eliminator and the main body a passage (69) for the refrigerant vapour which tapers in the upward direction.

3. An absorption chiller or absorption chiller-heater according to claim 2, wherein the eliminator (66) comprises a plurality of upwardly and outwardly slanted plates (67) each having at its upper end an upwardly projecting part (68) and a downwardly projecting part (65).

4. An absorption chiller or absorption chiller-heater according to any one of the preceding claims, wherein an enclosing member (70) with a closed upper end encloses a space (71) within the absorber (52) and a purge pipe (72) is connected to the space for subjecting the space to a reduced pressure to suck away uncondensed refrigerant vapour.

5. An absorption chiller or absorption chiller-heater according to any one of the preceding claims, wherein a flush box (77) is disposed between the evaporator (53) and the sump (57) and comprises inner and outer tubes (73, 74) separated by a flush chamber (78), with the inner tube having longitudinally spaced apertures (75) for discharging condensed refrigerant into the flush chamber to separate the condensed refrigerant into refrigerant vapour and refrigerant liquid, and the outer tube having a first set of longitudinally spaced apertures (76) for discharging the refrigerant liquid into the sump (57) and a second set of longitudinally spaced apertures (76') for discharging the refrigerant vapour into substantially the entire overlying length of the evaporator (53).

6. An absorption chiller or absorption chiller-heater according to any one of the preceding claims, wherein the modules (49) have the same height and are connected together laterally, with the width of the modules (49) varying in accordance with their respective capacities.

7. An absorption chiller or absorption chiller-heater according to any one of the preceding claims, wherein the modules (49) are covered by a cover (91) so as to look like a single apparatus.

8. An absorption chiller or absorption chiller-heater according to any one of the preceding claims, wherein a temperature sensor (93) is attached to the cold/warm water outlet (87) to detect the temperature of the cold/warm water therein, thereby to permit control of the amount of fuel supplied to the modules (49).

## Patentansprüche

1. Absorptionskühler oder Absorptionskühler-Erhitzer mit mehreren Einheiten (49), bei dem
die Einheiten (49) seitlich miteinander verbunden sind oder seitlich und vertikal miteinander verbunden sind,
ein Kalt-/Warmwassereinlaß (86), ein Kalt-/Warmwasserauslaß (87), ein Kühlwassereinlaß (89) und ein Kühlwasserauslaß (85) an der hinteren oder oberen Seite der mehreren Einheiten angeordnet sind und
jede Einheit (49)
i) eine Niedertemperatureinheit (50) mit einem kastenförmigen Hauptkörper (51), der im wesentlichen die Form eines rechteckigen Parallelepipeds hat und
einen in Richtung auf den Boden des Hauptkörpers angeordneten Absorber (52),
einen oberhalb des Absorbers angeordneten Verdampfer (53),
eine oberhalb des Verdampfers angeordnete Trennwand (56),
oberhalb der Trennwand angeordnet einen Niedertemperaturgenerator (54) und einen Kondensator (55) und
einen Kühlmittelsumpf (57), der zwischen dem Verdampfer und dem Absorber angeordnet ist und einen Querschnitt hat, der im wesentlichen V- oder U-förmig ist, so daß durch den Verdampfer verdampftes Kühlmittel über die Außenseite des Sumpfes zu dem Absorber strömt, enthält, und
ii) einstückig mit der Niedertemperatureinherit (50) wenigstens einen aus der Gruppe eines Hochtemperaturgenerators (80), eines Niedertemperaturwärmetauschers (14) und eines Hochtemperaturwärmetauschers (15) umfaßt.

2. Absorptionskühler oder Absorptionskühler-Erhitzer nach Anspruch 1, bei dem der Hauptkörper (51) auch einen Eliminator (66) enthält, welcher an der Seite des Verdampfers (53) in einem schiefen Winkel zu der benachbarten Wand des Hauptkörpers (51) positioniert ist, um so zwischen dem Eliminator und dem Hauptkörper einen Durchgang (69) für den Kühlmitteldampf zu begrenzen, welcher sich in Aufwärtsrichtung verjüngt.

3. Absorptionskühler oder Absorptionskühler-Erhitzer nach Anspruch 2, bei dem der Eliminator (66) mehrere nach oben und nach außen geneigte Platten (67) umfaßt, von denen jede an ihrem oberen Ende ein nach oben vorspringendes Teil (68) und ein nach unten vorspringendes Teil (65) hat.

4. Absorptionskühler oder Absorptionskühler-Erhitzer nach einem der vorausgehenden Ansprüche, bei dem ein Umschließungsteil (70) mit einem geschlossenen oberen Ende einen Raum (71) in dem Absorber (52) umschließt und eine Reinigungsleitung (72) mit dem Raum verbunden ist, um den Raum auf einen verminderten Druck zu bringen und so unkondensierten Kühlmitteldampf wegzusaugen.

5. Absorptionskühler oder Absorptionskühler-Erhitzer nach einem der vorausgehenden Ansprüche, bei dem ein Spülkasten (77) zwischen dem Verdampfer (53) und dem Sumpf (57) angeordnet ist und innere und äußere Röhren (73, 74) umfaßt, die durch eine Spülkammer (78) voneinander getrennt sind, wobei die innere Röhre in Längsrichtung voneinander beabstandete Öffnungen (75) zur Abgabe von kondensiertem Kühlmittel in die Spülkammer hat, um kondensiertes Kühlmittel in Kühlmitteldampf und Kühlmittelflüssigkeit zu trennen, und die äußere Röhre einen ersten Satz von in Längsrichtung voneinander beabstandeten Öffnungen (76) zur Abgabe der Kühlmittelflüssigkeit in den Sumpf (57) und einen zweiten Satz von in Längsrichtung voneinander beabstandeten Öffnungen (76') zur Abgabe des Kühlmitteldampfes in im wesentlichen die gesamte darüberliegende Länge des Verdampfers (53) hat.

6. Absorptionskühler oder Absorptionskühler-Erhitzer nach einem der vorausgehenden Ansprüche, bei dem die Einheiten (49) die gleiche Höhe haben und miteinander seitlich verbunden sind, wobei die Breite der Einheiten (49) gemäß ihren jeweiligen Kapazitäten variiert.

7. Absorptionskühler oder Absorptionskühler-Erhitzer nach einem der vorausgehenden Ansprüche, bei dem die Einheiten (49) durch eine Abdeckung (91) bedeckt sind, um so wie eine einzige Apparatur auszusehen.

8. Absorptionskühler oder Absorptionskühler-Erhitzer nach einem der vorausgehenden Ansprüche, bei dem ein Temperatursensor (93) an dem Kalt-/Warmwasserauslaß (87) befestigt ist, um die Temperatur des Kalt-/Warmwassers darin festzustellen und dadurch die Steuerung der den Einheiten (49) zugeführten Treibstoffmenge zu gestatten.

## Revendications

1. Dispositif de refroidissement ou dispositif de refroidissement-dispositif de chauffage à absorption comprenant une pluralité de modules (49), dans lequel :
les modules (49) sont reliés les uns aux autres latéralement ou reliés les uns aux autres latéralement et verticalement ;
une entrée d'eau froide/chaude (86), une sortie d'eau froide/chaude (87), une entrée d'eau de refroidissement (89) et une sortie d'eau de refroidissement (85) sont disposées sur le côté arrière ou supérieur de la pluralité de modules ; et
chaque module (49) comprend :
(i) une unité à basse température (50) ayant un corps principal en forme de boîtier (51) qui a sensiblement la forme d'un parallélépipède rectangle et qui contient :
un absorbeur (52) disposé vers le fond du corps principal ;
un évaporateur (53) disposé au-dessus de l'absorbeur ;
une paroi de séparation (56) disposée au-dessus de l'évaporateur ;
un régénérateur à basse température (54) et un condenseur (55) disposés au-dessus de la paroi de séparation ; et
un bassin de réception de réfrigérant (57) qui est disposé entre l'évaporateur et l'absorbeur et qui a une section transversale qui est sensiblement en forme de V ou de U si bien que le réfrigérant évaporé par l'évaporateur circule devant l'extérieur du bassin de réception vers l'absorbeur ; et
(ii) au moins un parmi un régénérateur à haute température (80), un échangeur de chaleur à basse température (14) et un échangeur de chaleur à haute température (15) d'un seul tenant avec l'unité à basse température (50).

2. Dispositif de refroidissement à absorption ou dispositif de refroidissement-dispositif de chauffage à absorption selon la revendication 1, dans lequel le corps principal (51) contient également un éliminateur (66) qui est positionné sur le côté de l'évaporateur (53) en angle oblique par rapport à la paroi adjacente du corps principal (51) de manière à définir entre l'éliminateur et le corps principal un passage (69) pour la vapeur de réfrigérant qui rétrécit dans la direction vers le haut.

3. Dispositif de refroidissement à absorption ou dispositif de refroidissement-dispositif de chauffage à absorption selon la revendication 2, dans lequel l'éliminateur (66) comprend une pluralité de plaques inclinées vers le haut et vers l'extérieur (67) ayant chacune au niveau de son extrémité supérieure une partie faisant saillie vers le haut (68) et une partie faisant saillie vers le bas (65).

4. Dispositif de refroidissement à absorption ou dispositif de refroidissement-dispositif de chauffage à absorption selon l'une quelconque des revendications précédentes, dans lequel un élément d'enfermement (70) avec une extrémité supérieure fermée enferme un espace (71) à l'intérieur de l'absorbeur (52) et un tuyau purgeur (72) est relié à l'espace pour soumettre l'espace à une pression réduite afin d'aspirer la vapeur de réfrigérant qui ne s'est pas condensée.

5. Dispositif de refroidissement à absorption ou dispositif de refroidissement-dispositif de chauffage à absorption selon l'une quelconque des revendications précédentes, dans lequel une boîte de rinçage (77) est disposée entre l'évaporateur (53) et le bassin de réception (57) et comprend des tubes interne et externe (73, 74) séparés par une chambre de rinçage (78), avec le tube interne ayant des ouvertures espacées longitudinalement (75) pour écouler le réfrigérant condensé à l'intérieur de la chambre de rinçage afin de séparer le réfrigérant condensé en réfrigérant en phase vapeur et en réfrigérant en phase liquide, et avec le tube externe ayant un premier ensemble d'ouvertures espacées longitudinalement (76) pour écouler le liquide de réfrigérant dans le bassin de réception (57) et un second ensemble d'ouvertures espacées longitudinalement (76') pour évacuer la vapeur de réfrigérant sur sensiblement toute la longueur sus-jacente de l'évaporateur (53).

6. Dispositif de refroidissement à absorption ou dispositif de refroidissement-dispositif de chauffage à absorption selon l'une quelconque des revendications précédentes, dans lequel les modules (49) ont la même hauteur et sont reliés les uns aux autres latéralement, la largeur des modules (49) variant selon leurs capacités respectives.

7. Dispositif de refroidissement à absorption ou dispositif de refroidissement-dispositif de chauffage à absorption selon l'une quelconque des revendications précédentes, dans lequel les modules (49) sont recouverts d'un cache (91) de manière à ressembler à un dispositif unique.

8. Dispositif de refroidissement à absorption ou dispositif de refroidissement-dispositif de chauffage à absorption selon l'une quelconque des revendications précédentes, dans lequel un détecteur de température (93) est fixé à la sortie d'eau froide/chaude (87) pour y détecter la température de l'eau froide/chaude, afin de permettre de ce fait la régulation de la quantité de combustible fournie aux modules (49).
